# EUROPÄISCHE PATENTSCHRIFT

(11) **EP 1 053 169 B1**
(45) Veröffentlichungstag und Bekanntmachung des Hinweises auf die Patenterteilung: **17.02.2010**
(21) Anmeldenummer: 99964536.9
(22) Anmeldetag: 09.12.1999
(51) Int. Cl.: B62L 3/02, B60T 1/10, B62L 1/10

(54) **BREMSZYLINDER FÜR EINE FELGENBREMSE**
BRAKE CYLINDER FOR RIM BRAKE
CYLINDRE DE FREIN POUR UN FREIN SUR JANTE

(30) Priorität: 09.12.1998 DE 19856804; 28.06.1999 DE 19929678
(43) Veröffentlichungstag der Anmeldung: 22.11.2000
(73) Patentinhaber: GUSTAV MAGENWIRTH GmbH & Co., D-72574 Bad Urach (DE)
(72) Erfinder: KRUMBECK, Markus, D-72574 Bad Urach (DE); RUCKH, Stefan, D-72587 Römerstein/Zainingen (DE); HUJER, Joachim, D-73342 Bad Ditzenbach (DE); ROTTENKOLBER, Ludwig, D-72574 Bad Urach (DE)
(74) Vertreter: Haug, Dietmar
(86) Internationale Anmeldenummer: PCT/EP1999/009701
(87) Internationale Veröffentlichungsnummer: WO 2000/034114

(56) Entgegenhaltungen:
- DE-A- 4 232 598
- FR-A- 2 152 676
- US-A- 5 813 501

## Beschreibung

Die Erfindung betrifft einen Bremszylinder für eine Felgenbremse gemäß dem Oberbegriff von Anspruch 1 bzw. eine Felgenbremse mit solchen Bremszylindern. Insbesondere betrifft die Erfindung einen Bremszylinder für eine hydraulische Felgenbremse für Fahrräder und eine hydraulische Felgenbremse.

Ein Bremszylinder ist aus der DE 42 32 598 C2 bekannt.

Bei der in der DE 42 32 598 C2 gezeigten Felgenbremse mit den dort offenbarten Bremszylindern ist es schwierig, das Laufrad zu demontieren, wenn der auf die Radfelge aufgezogene Reifen wesentlich breiter als die Radfelge ist, weil der Reifen durch den Spalt zwischen den beiden Bremsbelägen, die an den Bremszylindern angeordnet sind, bewegt werden muß. Besonders schwierig gestaltet sich die Demontage des Laufrads bei der Verwendung von den beispielsweise bei Mountain-Bikes eingesetzten dicken Reifen.

Die FR-2 152 676 offenbart einen Bremszylinder einer Felgenbremse gemäß dem Oberbegriff von Anspruch 1, bei dem der Bremsbelag an dem in dem Bremszylinder verschiebbar angeordneten Kolben angebracht ist. Der Bremszylinder ist in einer Führung 79, 80 angeordnet, die an einer Fahrradgabelbein befestigt ist. Der Bremszylinder kann zur Einstellung der Bremse in der Führung 79, 80 in Richtung der Felge verschoben werden. Die Führung 79, 80 kann mit dem Bremszylinder zur Einstellung der Bremse um eine Achse gedreht werden, die im wesentlichen senkrecht zu dem Federgabelbein verläuft, an dem die Führung befestigt ist.

Es ist daher die Aufgabe der Erfindung, einen Bremszylinder für eine Felgenbremse bzw. eine Felgenbremse anzugeben, der bzw. die bei einem einfachen Aufbau der Felgenbremse eine leichte Demontage des Laufrads erlaubt.

Die Aufgabe wird mit einem Bremszylinder gemäß den Merkmalen von Anspruch 1 bzw. mit einer Felgenbremse mit einem derartigen Bremszylinder gelöst. Vorteilhafte Ausgestaltungen der Erfindung sind in den abhängigen Ansprüchen angegeben.

Die Richtung der Aufnahmeeinrichtung für einen Bremsbelag bedeutet im Zusammenhang mit dieser Erfindung eine Richtung tangential zur Felge bezogen auf einen Bereich der Felge, an dem der Bremsbelag an der Felge angreift. Diese Richtung ist gleichbedeutend mit der Laufrichtung der Felge an der Stelle, an der der Bremsbelag an der Felge angreift.

Die Richtung der Hauptachse des Bremszylinders bedeutet im Zusammenhang mit dieser Erfindung eine Richtung, in der der Bremsbelag zur Felge hin bzw. von der Felge weg bewegt wird. In der Regel wird zur Betätigung der Bremse ein Kolben in dem Bremszylinder entlang der Hauptachse des Bremszylinders verschoben.

Die erfindungsgemäße Ausbildung des Bremszylinders gemäß Anspruch 1 bzw. der Felgenbremse gemäß einem der Ansprüche 11 bis 14 hat den Vorteil, daß infolge der schwenkbaren Anordnung des oder der Bremszylinder das Laufrad einfach und schnell aus und wieder eingebaut werden kann.

Außerdem hat die erfindungsgemäße Ausbildung des Bremszylinders gemäß Anspruch 1 bzw. der Felgenbremse gemäß einem der Ansprüche 11 bis 14 den Vorteil, daß eine aufwendige Neueinstellung der Bremszylinder bezüglich der Felge entfällt, weil die Schwenkung der Bremszylinder die Bremszylinder nach dem Wiedereinbau des Laufrads in die alte Einstellung zurückführt. Das ist insbesondere deshalb der Fall, weil die Bremszylinder zur Demontage des Laufrads nicht von dem Rahmen gelöst werden müssen bzw. eine definierte Führung der Bremszylinder bei der Schwenkbewegung gewährleistet ist. Insofern können die Bremszylinder nach jeder Schwenkbewegung immer in die exakt gleiche Ausgangsstellung zurückgeführt werden.

Eine bekannte Lösung zur Befestigung eines Bremszylinders einer hydraulischen Felgenbremse an Rahmenteile eines Fahrrads ist ein zweiteiliger Adapter mit einer schellenartiger Aufnahme des Bremszylinders. Die Befestigung des Adapters erfolgt auf einem Cantilever-Bremssockel. Freiheitsgrade der Ausrichtung des Bremszylinders in alle Richtungen für die Einstellung der Felgenbremse sind dabei durch eine kugelförmige Aufnahme gegeben.

Die bekannte Lösung hat die Nachteile, daß aufwendige, teure Teile verwendet werden. Die Teile sind zudem schwer und groß. Die Teilezahl ist groß. Die Montage der Felgenbremse erfordert eine aufwendige Einstellarbeit. Die aufwendige Einstellarbeit ist auch bei dem Wiedereinbau des Laufrads erforderlich.

Gemäß der Erfindung wird ein Bremszylinder bzw. eine Felgenbremse angegeben, der bzw. die mindestens ein Merkmal oder eine beliebige Kombination der folgenden Merkmale aufweist:
1) Der Bremszylinder ist schwenkbar an der Fahrradvordergabel oder dem Fahrradhinterbau angebracht.
2) Die Schwenkachse steht weitgehend parallel zum Gabelrohr bzw. der Sitzstrebe.
3) Das Schwenken erfolgt um die Längsachse des Gabelrohrs bzw. der Sitzstrebe.
4) Die Schwenkachse ist im wesentlichen senkrecht zu dem Bremsbelag.
5) Die Schwenkachse liegt innerhalb des Bremszylinders. Das hat den Vorteil, daß eine sehr kompakte Ausführung des Bremszylinders realisiert werden kann.
6) Die Schwenkachse liegt außerhalb des Bremszylinders. Das hat den Vorteil, daß die Konstruktion einer konkreten Ausführung einfacher wird, weil sich Kollisionen von Bauteilen bei der Schwenkbegung des Bremszylinders leichter vermeiden lassen.
7) Der Bremszylinder ist in Fahrtrichtung gesehen vor dem tragenden Teil angebracht.
8) Der Bremszylinder stützt die Anpresskräfte und Hauptbremskräfte im Kraftfluß formschlüssig ab.
9) Das Auschwenken eines oder beider Bremszylinder gewährleistet einen schnellen Laufradausbau.
10) Die Bremskräfte in Rückwärtsrichtung werden über eine lösbare Arretierung abgestützt.
11) Die Schwenkeinrichtung ist derart ausgebildet, daß eine definierte Führung der Bremszylinder bei der Schwenkbewegung gewährleistet ist. Insofern können die Bremszylinder nach jeder Schwenkbewegung immer in die exakt gleiche Ausgangsstellung zurückgeführt werden.
12) Die Freiheitsgrade im Anbau sind auf einen sinnvollen Bereich begrenzt.

Die Erfindung hat insbesondere folgende Vorteile:
- Sowohl der Bremszylinder als auch die Felgenbremse insgesamt ist einfach aufgebaut und weist wenige Teile auf.
- Weiterhin ist die Herstellung kostengünstig und es wird ein kleiner Bauraum benötigt.
- Die erfindungsgemäße Konstruktion führt zu einem niedrigen Gewicht.
- Der Bremszylinder und seine Befestigung läßt sich optisch gut integrieren.
- Die Laufradmontage und -demontage ist schnell und einfach.
- Die Bremsbelagjustage muß bei dem Wiedereinbau des Laufrads nicht neu erfolgen, sondern bleibt erhalten.
- Der Anbau der Felgenbremse bzw. der Bremszylinder erfolgt einfach, schnell, und eindeutig. Eine aufwendige Einjustierung entfällt.

Um die Lage des freien Endes des Kolbens innerhalb des Zylinders relativ zu dem Bremszylinder und somit relativ zu der Felge einzustellen, ist es bei Felgenbremsen bekannt, mittels einer Schraube an dem Geberzylinder hydraulische Flüssigkeit in den Druckraum des Bremszylinders einzuführen. Dabei verschiebt sich der Kolben entgegen der Wirkung einer Federanordnung in Richtung der Felge. Durch Lösen der Schraube am Geberzylinder wird hydraulische Flüssigkeit aus dem Druckraum abgezogen. Infolgedessen bewegt sich der Kolben durch die Kraft der Federeinrichtung wieder von der Felge weg zurück.

Unter freiem Ende des Kolbens ist das Ende des Kolbens zu verstehen, das bei einem an einem Fahrrad montierten Bremszylinder der Felge des Fahrrads gegenüberliegt und bei Betätigung des Bremszylinders die Verlagerung eines Bremsbelags in Richtung der Felge bewirkt.

Bei einer hydraulischen Felgenbremse werden üblicherweise zwei Bremszylinder mit einer Hydraulikleitung derart miteinander verbunden, daß durch die Betätigung des Bremshebels beide Bremszylinder gleichermaßen betätigt werden und die jeweiligen Kolben aus den Zylindern gleichermaßen ausrücken. Dementsprechend bewirkt die Verstellung der Einstellschraube am Geberzylinder die gleichzeitige Verstellung der Ruhelage der Kolben von beiden Bremszylindern. Es besteht aber der Bedarf, die Einstellung der Ruhestellung für eine optimale Anpassung der Bremse an die Felge für jeden Bremszylinder einzeln einzustellen.

Es ist beispielsweise bei Scheibenbremsen bekannt, statt eines geschlossenen Systems ein offenes System zu verwenden. Ein offenes System bedeutet ein System mit einem Ausgleichsbehälter, der in Ruhestellung des Bremshebels mit dem Druckraum des Bremssattels in Verbindung steht. Wird durch Verstellung des Kolbens in dem Bremssattel das Volumen des Druckraums verändert, kann ein entsprechender Ausgleich mit Hydraulikflüssigkeit durch den Ausgleichsbehälter erfolgen. Bei Betätigung der Bremse wird die Verbindung des Druckraums mit dem Ausgleichsbehälter unterbunden. Ein offenes System hat jedoch den Nachteil, daß es durch die Notwendigkeit eines Ausgleichsbehälters relativ aufwendig und damit bei der Herstellung teuer ist. Daher werden bei hydraulischen Felgenbremsen üblicherweise geschlossene Systeme ohne Ausgleichsbehälter eingesetzt.

Um die relative Lage des freien Endes des Kolbens bezüglich des Zylinders unabhängig von dem anderen Bremszylinder einstellen zu können, weist der erfindungsgemäße Bremszylinder vorzugsweise eine Verstellvorrichtung auf, mit der die relative Lage des freien Endes des Kolbens in axialer Richtung in dem Zylinder derart verstellbar ist, daß das Volumen des Druckraums im wesentlichen unverändert bleibt. Das hat den Vorteil, daß bei der Verstellung des freien Endes des Kolbens in axialer Richtung bezüglich des Zylinders kein Austausch von hydraulischer Flüssigkeit mit dem System erfolgt. Daher kann die Verstellung des freien Endes des Kolbens bei einem einzelnen Bremszylinder unabhängig von einem Ausgleichsbehälter erfolgen.

Beispielsweise kann die Verstellung der relativen Lage des freien Endes des Kolbens bezüglich des Zylinders mittels eines Verstellkolbens erfolgen, der den Kolben (und somit auch das freie Ende des Kolbens) mitsamt Druckraum in dem Zylinder in axialer Richtung verschiebt. Dadurch wird die relative Lage des freien Endes des Kolbens bezüglich des Zylinders geändert, wobei gleichzeitig das Volumen des Druckraums unverändert bleibt.

Vorteilhafterweise ist der Verstellkolben in einen Bereich des Zylinders eingeschraubt. Das hat den Vorteil, daß die Verstellung des freien Endes des Kolbens genau und zuverlässig erfolgen kann.

Vorteilhafterweise ist der Abstand zwischen dem Zufluß in den Druckraum und dem Verstellkolben in einer von dem Zufluß am weitesten entfernt liegenden Stellung größer als der maximal mögliche Verstellweg des Verstellkolbens. Dadurch wird jederzeit der mögliche Austausch hydraulischer Flüssigkeit zwischen dem Zufluß und dem Druckraum gewährleistet.

Vorteilhafterweise weist der Verstellkolben einen Sicherungsring auf, der den maximal möglichen Verstellweg des Verstellkolbens begrenzt.

Beispielsweise kann die Verstellung der relativen Lage des freien Endes der Kolbens bezüglich des Zylinders dadurch erfolgen, daß gemäß einem weiteren Ausführungsbeispiel der Erfindung der Kolben in der Länge verstellbar ausgebildet ist. Das hat den Vorteil, daß Lage und Größe des Druckraums beim Verstellen des Abstands zwischen freiem Ende des Kolbens und Felge nicht geändert werden müssen, weil der relative Abstand zwischen freiem Ende des Kolbens und Felge bzw. Bremsbelag und Felge allein durch Verstellung der Länge des Kolbens eingestellt werden kann.

Durch die Weiterbildung der vorliegenden Erfindung mit einer der beschriebenen Verstellvorrichtungen der relativen Lage des freien Endes des Kolbens bezüglich des Zylinders ergibt sich der weitere Vorteil, daß die Bremsbelagjustage besonders einfach und unabhängig von der Justage des Bremszylinders erfolgen kann. Insbesondere kann der Abstand des freien Endes des Kolbens bzw. des Bremsbelags von der Felge des Fahrrads durch die erfindungsgemäße Ausbildung der schwenkbaren Befestigung grob vorgegeben und durch die individuelle Verstellung der relativen Lage des freien Endes des Kolbens bezüglich des Zylinders des Bremszylinders fein eingestellt werden. Durch diese Weiterbildung ergibt sich insgesamt ein einfacher Aufbau des Bremszylinders mit wenigen Teilen. Insbesondere läßt sich die Montage des Bremszylinders am Fahrrad genau, einfach und schnell bewerkstelligen.

Durch die Weiterbildung der vorliegenden Erfindung mit einer der beschriebenen Verstellvorrichtungen der relativen Lage des freien Endes des Kolbens bezüglich des Zylinders ergibt sich außerdem der Vorteil, daß sich die Lage des Bremsbelags axial separat einstellen und bei Belagabnutzung nachstellen läßt.

Gemäß einer Ausführungsform der vorliegenden Erfindung ist das Anordnungsglied an dem Hinterbau des Rahmens bzw. der Gabel in Bezug auf die Felge derart angeordnet, daß sich beim Einbau des Bremszylinders an dem Anordnungsglied und beim Schwenken des Bremszylinders in die Bremsstelle automatisch die richtige Position zwischen dem Bremsbelag und der Felge einstellt.

Im folgenden wird die Erfindung beispielhaft anhand der in den Figuren gezeigten Ausführungsbeipiele beschrieben:
- Fig. 1: zeigt ein erstes Ausführungsbeispiel einer Felgenbremse gemäß der vorliegenden Erfindung mit erfindungsgemäßen Bremszylindern in einer Bremsstellung.
- Fig. 2: zeigt ein zweites Ausführungsbeispiel einer Felgenbremse gemäß der vorliegenden Erfindung mit erfindungsgemäßen Bremszylindern in einer Montagestellung.
- Fig. 3: zeigt das bevorzugte Ausführungsbeispiel einer Felgenbremse gemäß der vorliegenden Erfindung mit erfindungsgemäßen Bremszylindern, die teilweise im Querschnitt dargestellt sind.
- Fig. 4: zeigt einen Bremszylinder von Fig. 3 in einem größeren Maßstab.
- Fig. 5: zeigt eine perspektivische Ansicht des Bremszylinders von Fig. 3.
- Fig. 6: zeigt eine im Bereich der Befestigungsvorrichtung freigeschnittete Ansicht des Bremszylinder von Fig. 3 von oben.
- Fig. 7: zeigt einen Querschnitt eines Bremszylinders gemäß einem weiteren Ausführungsbeispiel der vorliegenden Erfindung.

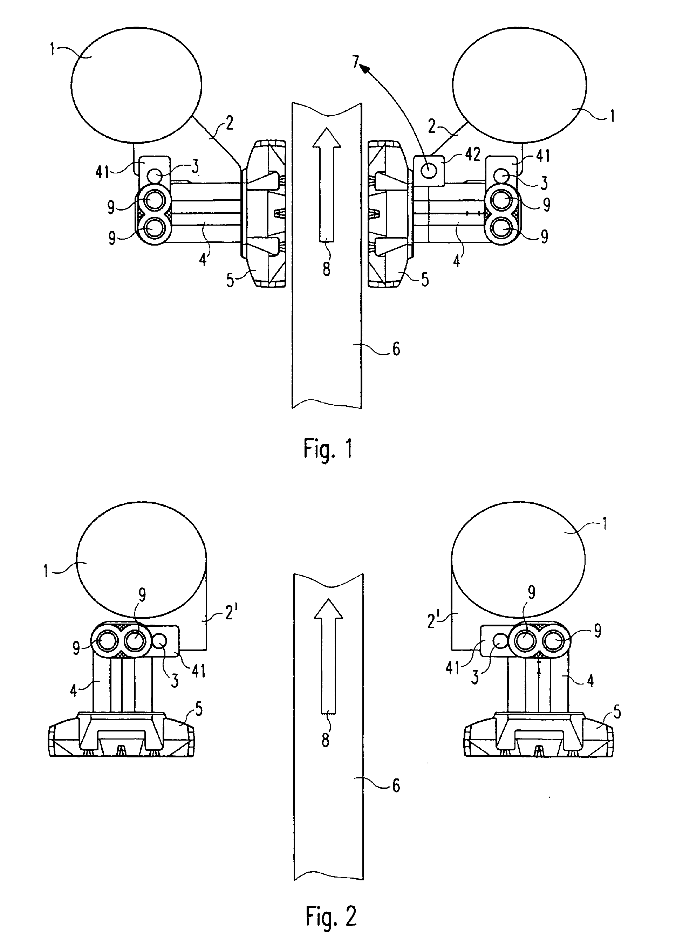

Fig. 1 zeigt ein erstes Ausführungsbeispiel einer Felgenbremse gemäß der vorliegenden Erfindung mit erfindungsgemäßen Bremszylindern in einer Bremsstellung. Bremsstellung bedeutet eine Stellung, in der die Bremsen betätigt werden können. Das in Fig. 1 gezeigte Ausführungsbeispiel ist für die Montage der Felgenbremse sowohl an der Vorderradgabel als auch an dem Hinterbau des Rahmens geeignet.

An zwei Rahmenteilen 1 eines nicht dargestellten Fahrrrads sind zwei Bremszylinder 4 angeordnet. Die Rahmenteile sind entweder die Gabelbeine der Vorderradgabel oder die Streben des Rahmenhinterbaus. Zwischen den Rahmenteilen 1 ist ein Laufrad, d.h. das Vorderrad oder Hinterrad angeordnet. Übersichtshalber ist schematisch nur ein Teil der Radfelge 6 dargestellt, auf die üblicherweise ein nicht dargestellter Reifen aufgezogen ist.

An einem nicht dargestellten Lenker ist eine nicht dargestellte Geberarmatur angebracht, die in bekannter Weise über Hydraulikleitungen 9 mit dem Bremszylindern 4 verbunden ist. Bei Betätigung des Handhebels der Geberarmatur wird ein hydraulischer Druck in den Hydraulikleitungen aufgebaut, der die Bremszylinder betätigt, die ihrerseits die daran in einer Aufnahmeeinrichtung 10 angeordneten Bremsbeläge 5 gegen die Felge 6 drücken.

An den Rahmenteilen 1 ist jeweils ein Anordnungsglied 2 angebracht. Bei dem dargestellten Ausführungsbeispiel ist das Anordnungsglied 2 als Lasche ausgebildet. Vorzugsweise sind die Anordnungsglieder 2 jeweils einstückig mit dem zugehörigen Rahmenteil 1 ausgebildet. Vorzugsweise sind die Anordnungsglieder derart ausgebildet, daß der Bremszylinder durch seine Befestigung bzw. Anordnung an dem Anordnungsglied hinreichend genau für den Bremsbetrieb eingestellt ist.

An den Anordnungsgliedern ist jeweils ein Bremszylinder 4 schwenkbar angeordnet. Die Bremszylinder 4 weisen an ihrem jeweils der Felge abgewandten Enden ein Verbindungsglied 41 auf. Die Verbindungsglieder 41 sind bei dem dargestellten Ausführungsbeispiel Ansätze mit Öffnungen, in denen Bolzen 3 aufgenommen sind, die jeweils an einem Anordnungsglied 2 angreifen. Die die Bolzen 3 aufnehmenden Ansätze der Bremszylinder 4 sind vorzugsweise jeweils einstückig mit dem zugehörigen Bremszylinder 4 ausgebildet.

Die Bremszylinder 4 sind über die Bolzen 3 an den Rahmenteilen 1 derart angelenkt, daß die Bremszylinder 4 jeweils um die Achse der Bolzen 3 schwenkbar sind. Diese Schwenkachse liegt im wesentlichen senkrecht zu der Laufrichtung der Felge an der Stelle, an der die Bremsbeläge beim Bremsen an der Felge angreifen. Anders ausgedrückt liegt die Schwenkachse im wesentlichen senkrecht zu den Bremsbelägen oder der Aufnahmeeinrichtung. Die definierte Führung der Schwenkeinrichtung ermöglicht die reproduzierbare Positionierung der Bremszylinder auch bei mehrmaligen Schwenkbewegungen, die beispielsweise beim Radein- bzw. - ausbau erforderlich sind.

Der mögliche Schwenkbereich des Bremszylinders 4 ist durch das Anordnungsglied 2 begrenzt. Bei der Betätigung der Bremse wird von der Felge 6 auf die Bremsbeläge 5 und von den Bremsbelägen 5 auf die Bremszylinder 4 Kräfte übertragen, deren Richtung der Laufrichtung 8 des Laufrads an der Stelle entspricht, an der die Bremsbeläge 5 an der Felge 6 angreifen. Diese Kräfte üben bezogen auf die durch den Bolzen 3 definierte Schwenkachsen auf die Bremszylinder 4 jeweils ein Drehmonent aus, das den jeweiligen Bremszylinder 4 in Richtung des zugehörigen Anordnungsglieds 2 dreht, d.h. den in Fig. 1 links dargestellten Bremszylinder entgegen dem Uhrzeigersinn und den in Fig. 1 rechts dargestellten Bremszylinder im Uhrzeigersinn. Die Bremszylinder 4 werden von den Anordnungsgliedern 2 formschlüssig aufgenommen. Daher wird die Kraft von den Bremszylindern 4 auf die Anordnungsgliedern und von den Anordnungsgliedern auf die Rahmenteile übertragen.

Gemäß einem Ausführungsbeispiel der Erfindung sind die Bremszylinder an den Anordnungsgliedern derart um eine Schwenkachse schwenkbar angeordnet, daß die beim Bremsen von dem Bremsbelag auf den Bremszlinder wirkende Kraft von der Mitte des Kontaktbereichs zwischen Bremsbelag und Felge ungefähr und vorzugsweise genau auf das Rohrzentrum des Rahmenteils zeigt, an dem der Bremszylinder angeordnet ist. Das hat den Vorteil, daß nur ein geringes bzw. kein Drehmoment auf das Rahmenteil ausgeübt wird, welches eine Verdrehung des Rahmenteils bewirken würde. Die beim Bremsen von dem Bremsbelag auf den Bremszylinder wirkende Kraft ist die Summe der von der Felge über den Bremsbelag auf den Bremszlinder ausgeübten Kraft, die parallel zur Bewegungsrichtung 8 der Felge gerichtet ist, zuzüglich der von der Felge auf den Bremsbelag beim Bremsen wirkenden Gegenkraft, die senkrecht zur Bewegungsrichtung 8 der Felge von der Felge weg gerichtet ist. Die Schwenkachse ist derart angeordnet, daß die beim Bremsen von dem Bremsbelag auf den Bremszylinder wirkende Kraft auf den Bremszylinder ein Drehmoment ausübt, derart, daß der Bremszylinder in die Bremsstellung gedreht wird, in der er an dem Anordnungsglied formschlüssig anliegt.

Das als Lasche ausgebildete Anordnungsglied 2 bildet einen Drehpunkt. Der Drehpunkt kann als mit dem Anordnungsglied einstückig ausgebildeter Stift vorgesehen oder als Bolzen 3 ausbildet sein. Der Drehpunkt dient als Aufnahme für den Bremszylinder 4. Die Reaktionskraft wird in Axial- und Tangentialrichtung von dem Anordnungsglied formschlüssig aufgenommen.

Bei dem in Fig. 1 rechts dargestellten Bremszylinder 4 ist weiterhin ein Arretierungsglied 42 vorgesehen. Das Arretierungsglied ist vorzugsweise einstückig mit dem Bremszylinder 4 ausgebildet. Im einer Öffnung des Arretierungsglieds 42 ist ein Bolzen 7 als lösbares Sicherungselement aufgenommen. Der Bolzen kann beispielsweise durch eine Feder in eine Schließstellung vorgespannt sein. Der Bolzen 7 bildet in der Schließstellung eine formschlüssige Verbindung des Bremszylinders 4 mit dem Anordnungsglied 2. Dadurch wird der Bremszylinder mit zwei Achsen gegenüber dem Anordnungsglied festgelegt und eine Drehung um die durch den Bolzen 3 definierte Schwenkachse unterbunden. Insbesondere bei Rückfährtsfahrt wird durch das lösbare Sicherungselement eine Drehung des Bremszylinders um die durch den Bolzen 3 definierte Schwenkachse unterbunden.

Zur Demontage des Laufrads ist der Bolzen 7 lösbar angeordnet, so daß der Bremszylinder 4 in die in Fig. 2 bei dem anderen Ausführungsbeispiel der Erfindung gezeigten Ausführungsbeispiel geschwenkt werden kann.

Bei einem nicht dargestellten Ausführungsbeispiel der Erfindung bewirkt ein Vorspannglied, daß der Bremszylinder 4 in der Bremsstellung gegen das Anordnungsglied 2 vorgespannt ist. Dadurch wird erreicht, daß sich der Bremszylinder selbsttätig z.B. aus der Montagestellung in die Bremsstellung zurückdreht. Außerdem wird bei Vorwärtsfahrt gewährleistet, daß die Bremszylinder immer in der Bremsstellung angeordnet sind.

Fig. 2 zeigt ein zweites Ausführungsbeispiel einer Felgenbremse gemäß der vorliegenden Erfindung mit erfindungsgemäßen Bremszylindern in einer Montagestellung. Montagestellung bedeutet eine Stellung, in der das Rad montiert und demontiert werden kann.

Das in Fig. 2 gezeigte Ausführungsbeispiel ist für die Montage der Felgenbremse sowohl an dem Hinterbau des Rahmens als auch an der das Vorderrad aufnehmenden Gabel geeignet.

Das Ausführungsbeispiel der Fig. 2 unterscheidet sich von dem Ausführungsbeispiel von Fig. 1 im wesentlichen durch die Ausbildung des Anordnungsglieds 2 bzw. 2'. Die übrigen gleichen Teile haben die gleichen Bezugszeichen wie das Ausführungsbeispiel von Fig. 1.

In der Montagestellung sind die beiden Bremszylinder 4 um 90° aus der Bremsstellung geschwenkt dargestellt. Infolgedessen behindern die Bremsbeläge 5 die Montage und Demontage des Laufrads nicht.

Zum Anbau eines Bremszylinder 4 an ein Rahmenteil 1 wird einfach der Bremszylinder 4 an seinem Verbindungsteil 41 über den Bolzen 3 mit dem Anordnungsglied 2 des Rahmenteils 1 schwenkbar verbunden. Bei der Ausführung mit dem lösbaren Sicherungselement wird anschließend der Bolzen 7 in das Arretierungsglied 42 eingesetzt und mit dem Anordnungsglied verbunden.

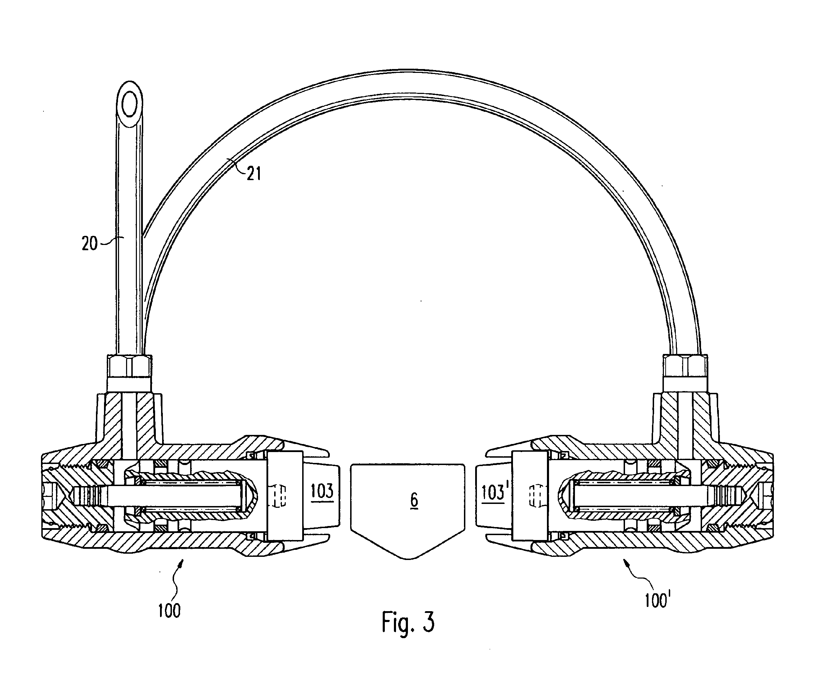

Die Figuren 3 bis 6 zeigen das bevorzugte Ausführungsbeispiel der Erfindung.

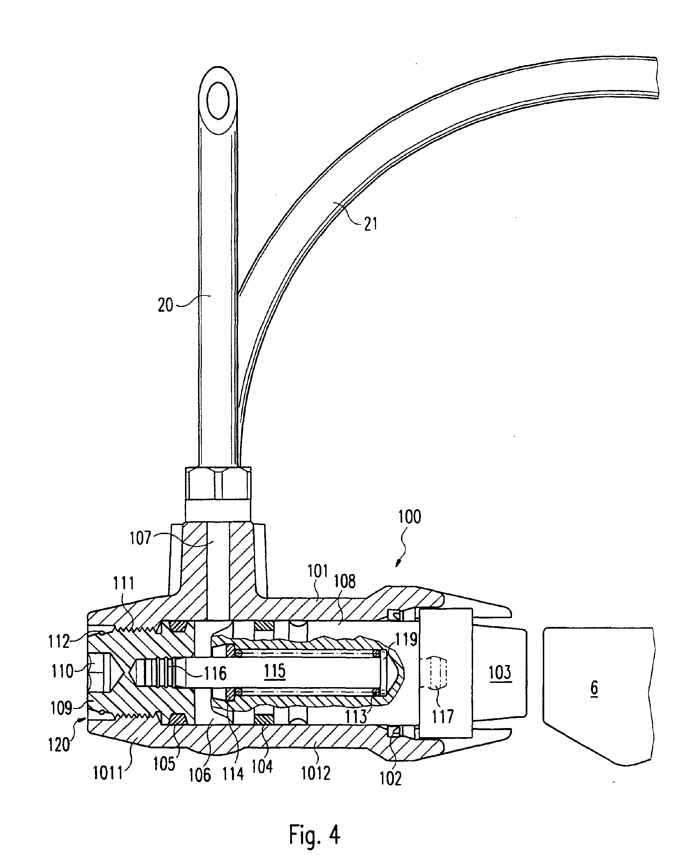

Fig. 3 zeigt eine Felgenbremse gemäß der vorliegenden Erfindung mit erfindungsgemäßen Bremszylindern 100, 100', die beidseitig einer Felge 6 angeordnet sind. Die zueinander symmetrischen Bremszylinder 100, 100' werden anhand des links dargestellten Bremszylinders 100 in Zusammenhang mit Fig. 4 näher beschrieben. Zur Betätigung der Bremse wird über einen Schlauch 20 Hydraulikflüssigkeit in den linken Bremszylinder 100 zugeführt. Gleichzeitig wird über einen nicht dargestellten zweiten Anschluß zum Druckraum 106 und einen Verbindungsschlauch 21 dem rechten Bremszylinder 100' Hydraulikflüssigkeit zugeführt. Die Zufuhr der Hydraulikflüssigkeit geschieht auf bekannte Weise über einen Bremshebel, der einen Geberzylinder betätigt, der Hydraulikflüssigkeit in den Schlauch 20 drückt.

Fig. 4 zeigt den linken Bremszylinder 100 von Fig. 3 in einem größeren Maßstab. Der Bremszylinder 100 weist einen Zylinder 101 mit einer durchgehenden Bohrung auf, deren Durchmesser in einem ersten Abschnitt 1011 kleiner als in einem zweiten Abschnitt 1012 ist. Der erste Abschnitt 1011 weist ein Innengewinde auf. In der Innenbohrung des Zylinders 101 sind von links nach rechts ein Verstellkolben 109, ein Druckraum 106 und ein Kolben 108 angeordnet.

Der Verstellkolben 109 weist auf der linken Seite einen Abschnitt kleineren Durchmessers auf, der mit einem Außengewinde 111 versehen ist, und einen zweiten in Fig. 4 rechts von dem ersten Abschnitt angeordneten Abschnitt größeren Durchmessers auf, in dem eine Nut für eine Dichtung 105 vorgesehen ist die den Druckraum 106 abdichtet. Der Verstellkolben 109 ist mit dem Außengewinde 111 in das Innengewinde des Zylinders 101 eingeschraubt. Zur Verdrehung des Verstellkolbens 109 ist ein Innensechskant 110 in der Stirnfläche des Verstellkolbens 109 vorgesehen. Der Sicherungsring 112 begrenzt den möglichen Verstellweg des Verstellkolbens 109 in der Innenbohrung dadurch, daß er bei der maximal möglichen Verstellung an dem Innengewinde in dem Abschnitt 1011 des Zylinders 101 anstößt. Rechts neben dem Verstellkolben ist der Druckraum 106 angeordnet, der im Betrieb mit Hydraulikflüssigkeit gefüllt ist. Der Druckraum 106 ist über einen Zufluß 107 mit dem Schlauch 20 verbunden. Rechts neben dem Druckraum 106 ist der Kolben 108 angeordnet. Der Kolben 108 weist eine umlaufende Nut für eine Dichtung 104 zur Abdichtung des Druckraums 106 auf. Der Kolben 108 weist des weiteren eine Innenbohrung auf, in der der Bolzen 115 und die Feder 113 aufgenommen sind. Die Feder 113 stützt sich auf der linken Seite an einer Scheibe 114 ab, die in einem ersten Abschnitt der Bohrung, die einen größeren Durchmesser aufweist, in den Kolben 108 eingesetzt und verstemmt ist. Die Befestigung der Scheibe 114 kann alternativ oder zusätzlich auch durch andere übliche Sicherungsbauteile erfolgen, wie beispielsweise einen Seegerring. Auf der rechten Seite stützt sich die Feder 113 an einem Kopf 119 des Bolzens 115 ab. Der Bolzen 115 ist in dem Verstellkolben 109 mit einer Preßpassung 116 befestigt. Alternativ oder zusätzlich könnte der Bolzen 115 in dem Verstellkolben 109 auch durch eine Klebe-, Löt- bzw. Gewindeverbindung befestigt sein.

Der Kolben weist einen Befestigungskopf 117 auf, an dem der Bremsbelag 103 befestigt ist. Um den Eintritt von Schmutz in den Zylinder 101 zu verhindern, ist ein Abstreifer 102 im Bereich der Öffnung des Zylinders 101 vorgesehen.

Bei Betätigung des nicht dargestellten Bremshebels wird ein Kolben in einem nicht dargestellten Geberzylinder betätigt, der Hydraulikflüssigkeit in den Schlauch 20 preßt. Dadurch wird über den Zufluß 107 Hydraulikflüssigkeit in den Druckraum 106 eingebracht. In Folge dieser Druckerhöhung verschiebt sich der Kolben 108 in dem Zylinder 101 entgegen der Wirkung der Feder 113 nach rechts, so daß der Belag 103 an der Felge 6 anliegt und eine Bremswirkung erfolgen kann. Über den Verbindungsschlauch 21 wird entsprechend Hydraulikflüssigkeit dem Bremszylinder 100' zugeführt und der Kolben dieses Bremszylinders entsprechend betätigt. Läßt der Druck der Hydraulikflüssigkeit durch Loslassen des Bremshebels nach, wird der Kolben 108 durch die Feder 113 zurück in die Ausgangsstellung geschoben und die Hydraulikflüssigkeit zurück in den Schlauch 20 gedrückt.

Für eine optimale Bremswirkung ist es erforderlich, den Abstand zwischen dem Bremsbelag 103 und der Felge 6 einzustellen. Beispielsweise bei Abnutzung des Bremsbelags 103 ist es erforderlich, die Grundstellung des Kolbens 108 nach rechts zu verschieben. Das kann bei dem erfindungsgemäßen Bremszylinder einfach dadurch geschehen, daß der Verstellkolben 109 über das Gewinde 111 in der Innenbohrung des Zylinders 101 verdreht und damit in axialer Richtung bewegt wird. Der Verstellkolben 109 verschiebt den Kolben 108 insbesondere mittels des Bolzens 115 nach rechts. Die Spannung der Feder 113 verändert sich dabei nicht. Im Grunde werden alle Teile in der Innenbohrung in dem Zylinder 101 relativ zu dem Zylinder 101 in axialer Richtung verschoben.

Um eine sichere Funktion der Bremse jederzeit zu gewährleisten, ist es wichtig, daß die Verstellung nicht so weit erfolgt, daß der Verstellkolben 109 den Zufluß 107 in den Druckraum 106 verschließt. Daher ist der Sicherungsring 112 derart angeordnet, daß er die Verstellmöglichkeit des Verstellkolbens 109 derart begrenzt, daß er immer links von dem Zufluß 107 angeordnet ist.

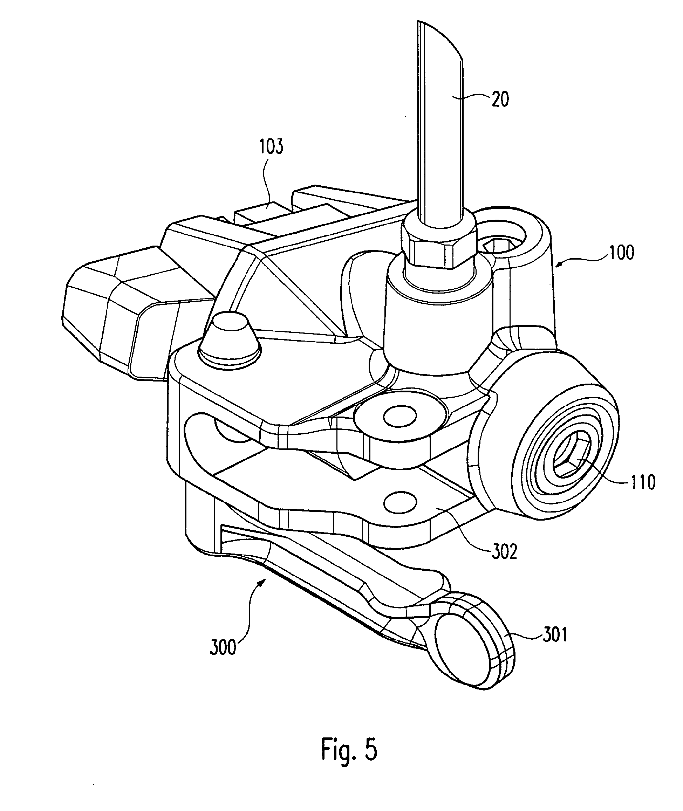

Fig. 5 zeigt eine perspektivische Ansicht des Bremszylinders 100 der Figuren 3 und 4. Die perspektivische Ansicht zeigt die bevorzugte erfindungsgemäße Befestigungsvorrichtung 300 für den Bremszylinder. Der Bremszylinder ist an einem Rahmenteil mit den Ansätzen 302 durch einen in Fig. 5 nicht dargestellten Bolzen schwenkbar befestigbar. Um die Schwenkbewegung schnell durchführen zu können, ist ein Schnellspannhebel 301 vorgesehen.

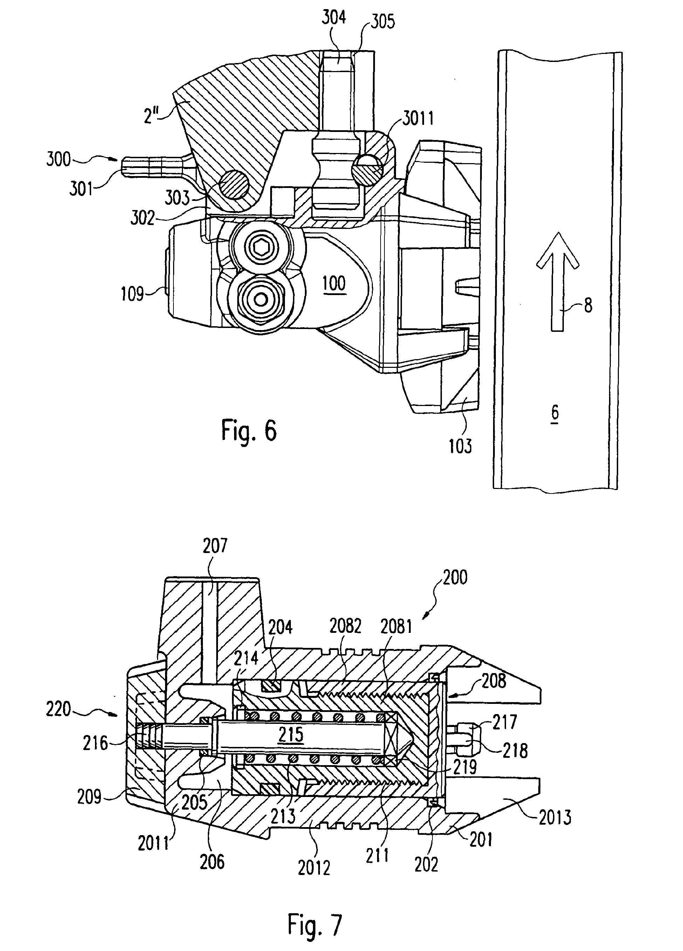

Fig. 6 zeigt eine im Bereich der Befestigungsanordnung 300 frei geschnittene Ansicht des Bremszylinders 100 der Figuren 3 bis 5 von oben. Anhand dieser Darstellung läßt sich die bevorzugte erfindungsgemäße Befestigungsvorrichtung 300 am besten beschreiben.

In Fig. 6 ist die Befestigungsvorrichtung lediglich für den in Fig. 3 links dargestellten Bremszylinder 100, d.h. den in Fahrtrichtung der Fahrrads linken Bremszylinder dargestellt. Die Befestigungsvorrichtung 300 für den anderen Bremszylinder ist entsprechend, d.h. spiegelverkehrt, aufgebaut.

Das Anordnungsglied 2" ist an dem Hinterbau des Fahrradrahmens bzw. an der Gabel des Fahrrads angeordnet. Der Bremszylinder 100 ist an dem Anordnungsglied 2" über den Bolzen 303 schwenkbar angeordnet. Der Bolzen 303 greift sowohl in eine Öffnung des Anordnungsglieds 2" als auch in eine Öffnung des Verbindungsglieds 302 ein. Zur Arretierung der Schwenkbewegung um die durch den Bolzen 303 bestimmte Achse ist ein exzentrischer Spannbolzen 3011 vorgesehen, der mit einem Schnellspannhebel 301 verbunden ist. Der exzentrische Schnellspannhebel 3011 wirkt mit einer Schraube 304 zusammen, die in eine in dem Anordnungsglied 2" ausgebildeten Gewindebohrung 305 eingeschraubt ist. Die durch das Zusammenwirken des exzentrischen Spannbolzens mit dem mit einer Ausparung versehenen Kopf der Schraube 305 bewirkte Vorspannung kann durch die Schraube 304 voreingestellt werden.

Fig. 6 zeigt den Bremszylinder 100 in einer Stellung, in der die Schwenkbewegung arretiert ist. Durch Umlegen des Spannhebels 301 in eine Stellung parallel zu der Felge 6 gibt der exzentrische Spannbolzen 3011 den Kopf der Schraube 304 derart frei, daß der Bremszylinder 100 um die durch die Bolzen 303 bestimmte Achse in die Montagestellung geschwenkt werden kann.

Die in Fig. 6 dargestellte Befestigungsvorrichtung 300 stellt eine besonders einfache und zuverlässige Befestigung des Bremszylinders 100 an dem Anordnungsglied 2" und Arretierung der Schwenkbewegung um die durch den Bolzen 303 bestimmte Achse dar. Insbesondere wird eine lösbare Arretierung zwischen dem Bremszylinder 100 dem Anordnungsglied 2'' zu Verfügung gestellt.

Bei einem weiteren nicht dargestellten Ausführungsbeispiel ist der Bremszylinder nicht, wie in Fig. 6 dargestellt, in Laufrichtung 8 der Felge 6 gesehen vor dem Rahmenteil und dem Anordnungsglied 2'', sondern in Laufrichtung der Felge gesehen hinter dem Anordnungsglied und dem Rahmenteil angeordnet. Dieses Ausführungsbeispiel ist insbesondere für Anwendungsfälle geeignet, bei denen der Platz im Kniebereich zwischen Rahmen und Gabel begrenzt ist. Das Ausführungsbeispiel entspricht dem in Fig. 6 gezeigten, wobei die Laufrichtung 8 jedoch in die andere Richtung zeigt. Auch dieses Ausführungsbeispiel stellt eine integrierte Lösung und eine definierte Schwenkbewegung des Bremszylinders in die Bremsstellung zur Verfügung. Bei diesem Ausführungsbeispiel muß in Folge der geänderten Kräfteverteilung beim Bremsen der exzentrische Spannbolzen geeignet dimensioniert werden, um die beim Bremsen auftretenden Kräfte aufnehmen zu können.

Fig. 7 zeigt einen Schnitt durch ein weiteres Ausführungsbeispiel eines erfindungsgemäßen Bremszylinders. Der Bremszylinder weist einen Zylinder 201 mit einer Bohrung auf, in der ein Kolben 208 verschiebbar angeordnet ist. Links neben dem Kolben 208 ist ein Druckraum 206 vorgesehen, der über einen Zufluß 207 mit einem nicht dargestellten Schlauch 20 verbunden ist, der mit dem nicht dargestellten Geberzylinder verbunden ist. Der Kolben 208 weist ein Kolbeninnenteil 2081 und ein Kolbenaußenteil 2082 auf. Das Kolbenaußenteil 2082 weist eine Bohrung mit einem Innengewinde auf. Das Kolbeninnenteil 2081 weist ein Außengewinde auf, das in das Innengewinde des Kolbenaußenteils 2082 eingreift. Durch Verdrehung des Kolbeninnenteils 2081 gegenüber dem Kolbenaußenteil 2082 ist es somit möglich, die Länge des Kolbens 208 zu verändern. Das Kolbeninnenteil 2081 weist eine nicht kreisförmige Innenbohrung auf, in der ein Bolzen 215 mit einem Kopf drehfest angeordnet ist. Der Kopf weist eine dem Querschnitt der Bohrung entsprechenden Querschnitt auf. Bei dem dargestellten Ausführungsbeispiel ist der Querschnitt des Kolbeninnenteils sechseckig und der Kopf des Bolzens ein herkömmlicher Sechskant. An dem Kopf des Bolzens 215 ist die Feder 213 abgestützt. Auf der dem Druckraum 206 benachbarten Seite des Kolbeninnenteils 2081 weist das Kolbeninnenteil 2081 eine kurze größere Bohrung auf, in die eine Scheibe 214 eingesetzt und verstemmt ist. Die Befestigung der Scheibe 114 kann alternativ oder zusätzlich auch durch andere übliche Sicherungsbauteile erfolgen, wie beispielsweise einen Seegerring. An der Scheibe 214 stützt sich die Feder 213 ab. Der Bolzen geht durch eine Öffnung in der den Druckraum 206 abschließenden rechten Wand des Bremszylinders 200 hindurch. Die Dichtung 205 dichtet den Druckraum 206 gegenüber der Umgebung ab. Das Kolbeninnenteil 2081 weist eine Nut auf, in der die Dichtung 204 zur Abdichtung des Druckraums 206 angeordnet ist. Um eine Verschmutzung des Inneren des Zylinders 201 zu vermeiden, ist ein Abstreifer 202 an der Öffnung des Zylinders 201 vorgesehen.

Ein Verstellrad 209 ist an dem Bolzen 215 mit einer Preßpassung 216 drehfest befestigt und somit drehfest mit dem Kolbeninnenteil 2081 verbunden. Alternativ oder zusätzlich könnte der Bolzen 215 mit dem Verstellrad 209 auch über eine Klebe-, Löt- bzw. Gewindeverbindung verbunden sein. Das Kolbenaußenteil 2082 weist einen Befestigungskopf 217 zur Befestigung des nicht dargestellten Bremsbelags auf. Der Bremsbelag greift mit seinen äußeren Enden in Fortsätze 2013 des Bremszylinders ein. Dadurch ist der Bremsbelag drehfest gegenüber dem Bremszylinder 200 angeordnet. Der Befestigungskopf 217 weist eine Fläche 218 auf, die das Kolbenaußenteil 2082 gegen Verdrehung gegenüber dem Bremsbelag und damit gegenüber dem Zylinder 201 sichert. Durch Verdrehen des Verstellrads 209 kann somit das drehfest mit dem Verstellrad verbundene Kolbeninnenteil 2081 gegenüber dem mit dem Bremszylinder 200 im wesentlichen drehfest angeordneten Kolbenaußenteil 2082 verdreht werden. Dadurch verändert sich die Länge des Kolbens 208 und der Abstand des Bremsbelags von der Felge. Da sich die Lage des Kolbens 208 relativ zu dem Druckraum 206 nicht ändert, bleibt das Volumen des Druckraums 206 unverändert.

Die Erfindung betrifft somit auch einen Bremszylinder für eine hydraulische Felgenbremse mit einem Druckraum und einem Zylinder, in dem ein Kolben verschiebbar angeordnet ist, wobei der Druckraum gemeinsam mit dem Kolben verschiebbar ist.

Die Erfindung betrifft somit auch einen Bremszylinder für eine hydraulische Felgenbremse oder Scheibenbremse mit einem Zylinder, in dem ein Kolben verschiebbar angeordnet ist, wobei die Länge des Kolbens verstellbar ist.

Die Erfindung betrifft somit auch einen Bremszylinder für eine hydraulische Bremse mit einem Zylinder, in dem ein Kolben in axialer Richtung des Zylinders verschiebbar angeordnet ist, einem Druckraum, wobei der Kolben in dem Zylinder durch Veränderung des Volumens des Druckraums verschiebbar ist, und einer Verstellvorrichtung, mit der die relative Lage des freien Endes des Kolbens in axialer Richtung bezüglich des Zylinders derart verstellbar ist, daß das Volumen des Druckraums im wesentlichen unverändert bleibt.

Die Erfindung betrifft somit auch einen voranstehend beschriebenen Bremszylinder, bei dem durch Betätigung der Verstelleinrichtung der Kolben gemeinsam mit dem Druckraum in dem Zylinder in axialer Richtung verschiebbar ist.

Die Erfindung betrifft somit auch einen voranstehend beschriebenen Bremszylinder, bei dem die Verstellvorrichtung einen Verstellkolben aufweist, der in dem Zylinder derart verschiebbar angeordnet ist, daß sich der Druckraum zwischen dem Kolben und dem Verstellkolben befindet.

Die Erfindung betrifft somit auch einen voranstehend beschriebenen Bremszylinder, bei dem der Zylinder einen Abschnitt mit einem Innengewinde aufweist, in den der Verstellkolben mit einem Außengewinde eingeschraubt ist.

Die Erfindung betrifft somit auch einen voranstehend beschriebenen Bremszylinder, bei dem der Verstellkolben einen Innensechskant aufweist, um den Verstellkolben zur Verstellung in dem Zylinder zu drehen.

Die Erfindung betrifft somit auch einen voranstehend beschriebenen Bremszylinder, bei dem der Verstellkolben und der Kolben über eine Federanordnung miteinander verbunden sind.

Die Erfindung betrifft somit auch einen voranstehend beschriebenen Bremszylinder, bei dem der Abstand zwischen dem Zufluß für hydraulische Flüssigkeit in den Druckraum und dem Verstellkolben in einer von dem Zufluß am weitesten entfernt liegenden Stellung größer als der maximal mögliche Verstellweg des Verstellkolbens ist.

Die Erfindung betrifft somit auch einen voranstehend beschriebenen Bremszylinder, bei dem der Verstellkolben einen Sicherungsring zur Begrenzung des Verstellwegs aufweist.

Die Erfindung betrifft somit auch einen voranstehend beschriebenen Bremszylinder, bei dem der Verstellkolben mit einer Dichtung gegenüber dem Druckraum und der Kolben mit einer Dichtung gegenüber dem Druckraum abgedichtet ist.

Die Erfindung betrifft somit auch einen voranstehend beschriebenen Bremszylinder, bei dem der Kolben in der Länge verstellbar ausgebildet ist.

Die Erfindung betrifft somit auch einen voranstehend beschriebenen Bremszylinder, bei dem der Kolben ein mit der Verstelleinrichtung drehfest angeordnetes Teil und ein mit dem Zylinder im wesentlichen drehfest angeordnetes Teil aufweist.

Die Erfindung betrifft somit auch einen voranstehend beschriebenen Bremszylinder, bei dem der Kolben ein Kolbeninnenteil und ein Kolbenaußenteil aufweist, die über ein Gewinde zueinander verdrehbar angeordnet sind, und bei dem die Verstellvorrichtung ein Verstellrad aufweist, das mit dem Kolbeninnenteil drehfest verbunden ist, wobei das Kolbenaußenteil in dem Zylinder gegenüber dem Zylinder im wesentlichen drehfest angeordnet ist.

Die Erfindung betrifft somit auch einen voranstehend beschriebenen Bremszylinder, bei dem das Verstellrad vorzugsweise über einer Preßpassung drehfest mit einem Bolzen verbunden ist, wobei der Bolzen einen nicht runden Kopf aufweist, der in eine Öffnung des Kolbeninnenteils, die vorzugsweise einen dem Querschnitt des Kopfs entsprechenden Querschnitt aufweist, derart eingreift, daß eine drehschlüssige Verbindung zwischen dem Verstellrad und dem Kolbeninnenteil hergestellt ist.

Die Erfindung betrifft somit auch einen voranstehend beschriebenen Bremszylinder, bei dem das Kolbenaußenteil einen Befestigungskopf zur Aufnahme eines Bremsbelags aufweist, der im wesentlichen drehfest zu dem Zylinder angeordnet ist, wobei der Befestigungskopf eine Fläche zur Verdrehsicherung des Kolbenaußenteils gegenüber dem Belag aufweist.

Die Erfindung betrifft somit auch einen voranstehend beschriebenen Bremszylinder, bei dem der Bremsbelag in Endbereichen zwischen Fortsätzen des Zylinders angeordnet ist.

Die Erfindung betrifft somit auch einen voranstehend beschriebenen Bremszylinder, bei dem der Kolben entgegen der Kraft einer Feder in dem Zylinder in axialer Richtung verschiebbar angeordnet ist.

Die Erfindung betrifft somit auch einen voranstehend beschriebenen Bremszylinder, bei dem der Kolben einen Hohlraum aufweist, in dem ein Bolzen der in axialer Richtung fest mit der Verstellvorrichtung verbunden ist, aufgenommen ist, wobei die Feder mit ihrem druckraumseitigen Ende am Kolben und mit ihrem anderen Ende an einem Kopf des Bolzens abgestützt ist.

Die Erfindung betrifft somit auch einen voranstehend beschriebenen Bremszylinder, bei dem die axiale Abstützung der Feder am Kolben mittels einer Scheibe erfolgt.

Die Erfindung betrifft somit auch eine hydraulische Felgenbremse mit mindestens einem und vorzugsweise zwei der voranstehend beschriebenen Bremszylinder.

### Bezugszeichenliste

- 1: Rahmenteil (Gabelbein oder Hinterbau des Rahmens)
- 2, 2',2 ": Anordnungsglied
- 3: Bolzen (schwenkbare Verbindung)
- 4: Bremszylinder
- 41: Verbindungsglied
- 42: Arretierungsglied
- 5: Bremsbelag
- 6: Felge
- 7: Bolzen (lösbare Arretierung)
- 8: Laufrichtung der Felge
- 9: Hydraulikleitung
- 10: Aufnahmeeinrichtung (für einen Bremsbelag)

- 20: Schlauch
- 21: Verbindungsschlauch

- 100: Bremszylinder
- 101: Zylinder
- 1011: erster Abschnitt
- 1012: zweiter Abschnitt
- 102: Abstreifer
- 103: Bremsbelag
- 104: Dichtung
- 105: Dichtung
- 106: Druckraum
- 107: Zufluß
- 108: Kolben
- 109: Verstellkolben
- 110: Innensechskant
- 111: Gewinde
- 112: Sicherungsring (zur Hubraumbegrenzung)
- 113: Feder
- 114: Scheibe
- 115: Bolzen
- 116: Preßpassung
- 117: Befestigungskopf
- 119: Bolzenkopf

- 200: Bremszylinder
- 201: Zylinder
- 2013: Fortsatz
- 202: Abstreifer
- 203: Bremsbelag
- 204: Dichtung
- 205: Dichtung
- 206: Druckraum
- 207: Zufluß
- 208: Kolben
- 2081: Kolbeninnenteil
- 2082: Kolbenaußenteil
- 209: Verstellrad
- 210: Sechskant (zur Mitnahme des Kolbens)
- 211: Gewinde
- 213: Feder
- 214: Scheibe
- 215: Bolzen
- 217: Befestigungskopf
- 218: Fläche (zur Verdrehsicherung des Kolbenaußenteils gegenüber dem Belag)
- 220: Verstellvorrichtung

- 300: Befestigungsvorrichtung
- 301: Schnellspannhebel
- 3011: exzentrischer Spannbolzen
- 302: Verbindungsglied
- 303: Bolzen
- 304: Schraube
- 305: Gewindebohrung

## Patentansprüche

1. Bremszylinder (4; 100, 100'; 200) für eine hydraulische Felgenbremse, wobei der Bremszylinder eine Aufnahmeeinrichtung (10) zur Aufnahme eines Bremsbelags (5; 103) in der Aufnahmeeinrichtung aufweist,
wobei eine Richtung dieser Aufnahmeeinheit gleichbedeutend mit der Laufrichtung der Felge an der Stelle ist, an der der in die Aufnahmeeinrichtung einzusetzende Bremsbelag an der Felge angreift, und
ein Verbindungsglied (41; 302), das so ausgebildet ist, dass es eine Schwenkachse zur schwenkbaren Anordnung des Bremszylinders (4; 100, 100'; 200) an einem Rahmenteil (1) definiert,
wobei die Schwenkachse im wesentlichen orthogonal zu der Hauptachse des Bremszylinders (4; 100, 100'; 200) liegt,
**gekennzeichnet dadurch, dass**
die Schwenkachse im wesentlichen orthogonal zu dieser Richtung der Aufnahmeeinrichtung (10) für den Bremsbelag (5; 103) angeordnet ist.

2. Bremszylinder (4; 100, 100'; 200) nach Anspruch 1, **dadurch gekennzeichnet, daß** das Verbindungsglied (41; 302) als Ansatz des Bremszylinders (4; 100, 100'; 200) ausgebildet ist.

3. Bremszylinder (4; 100, 100'; 200) nach einem der vorhergehenden Ansprüche, **dadurch gekennzeichnet, daß** das Verbindungsglied (41; 302) eine Öffnung aufweist, in der ein Bolzen (3; 303) zur schwenkbaren Anordnung des Bremszylinders (4; 100, 100'; 200) an dem Rahmenteil aufnehmbar ist.

4. Bremszylinder (4; 100, 100'; 200) nach einem der vorhergehenden Ansprüche, **dadurch gekennzeichnet, daß** der Bremszylinder (4; 100, 100'; 200) hydraulisch betätigbar ist.

5. Bremszylinder (4; 100, 100'; 200) nach einem der vorhergehenden Ansprüche, **dadurch gekennzeichnet, daß** der Bremszylinder (4; 100, 100'; 200) ein Verbindungsglied (41; 302) aufweist, in dem ein Bolzen (3; 303) aufgenommen ist, der mit einem Anordnungsglied (2; 2'; 2") in Eingriff ist, das an dem Rahmenteil (1) angeordnet ist.

6. Bremszylinder (4; 100, 100'; 200) nach einem der vorhergehenden Ansprüche, **dadurch gekennzeichnet, daß** der Bremszylinder (4; 100, 100'; 200) eine lösbare Arretierung (300) der Schwenkbewegung aufweist.

7. Bremszylinder (4; 100, 100'; 200) nach einem der vorhergehenden Ansprüche, **dadurch gekennzeichnet, daß** der Bremszylinder (4; 100, 100'; 200) eine Rückstellfeder aufweist, die den Bremszylinder (4; 100, 100'; 200) gegen das Anordnungsglied (2; 2'; 2") in eine Bremsstellung vorspannt.

8. Bremszylinder (100; 200) nach einem der vorhergehenden Ansprüche für eine hydraulische Bremse mit
einem Zylinder (101; 201), in dem ein Kolben (108; 208) in axialer Richtung des Zylinders (101; 201) verschiebbar angeordnet ist,
einem Druckraum (106; 206), wobei der Kolben (108; 208) in dem Zylinder (101; 201) durch Veränderung des Volumens des Druckraums (106; 206) verschiebbar ist, und
einer Verstellvorrichtung (120; 220), mit der die relative Lage des freien Endes des Kolbens (108; 208) in axialer Richtung bezüglich des Zylinders (101; 201) derart verstellbar ist, daß das Volumen des Druckraums (106; 206) im wesentlichen unverändert bleibt.

9. Bremszylinder (100) nach Anspruch 8, **dadurch gekennzeichnet, daß** durch Betätigung der Verstelleinrichtung (120) der Kolben (108) gemeinsam mit dem Druckraum (106) in dem Zylinder (101) in axialer Richtung verschiebbar ist.

10. Bremszylinder (200) nach Anspruch 8, **dadurch gekennzeichnet, daß** der Kolben (208) in der Länge verstellbar ausgebildet ist.

11. Felgenbremse, insbesondere für Fahrräder, mit einem oder zwei Bremszylindern (4; 100, 100'; 200) nach einem der vorhergehenden Ansprüche.

12. Felgenbremse, insbesondere für Fahrräder, nach Anspruch 11
mit zwei Bremszylindern (4; 100, 100'; 200) zur Befestigung an Rahmenteilen (1), derart, dass die Bremszylinder eine Radfelge (6) zwischen sich einschließen,
wobei mindestens ein Bremszylinder (4; 100, 100'; 200) an dem Rahmenteil (1) um eine Achse schwenkbar anordbar ist, die im wesentlichen parallel zu dem Verlauf des Rahmenteils (1) bei der Befestigungsstelle verläuft.

13. Felgenbremse, insbesondere für Fahrräder,
mit zwei Bremszylindern (4; 100, 100'; 200) zur Befestigung an Rahmenteilen (1), derart, dass die Bremszylinder eine Radfelge (6) zwischen sich einschließen und jeweils eine Aufnahmeeinrichtung (10) zur Aufnahme eines Bremsbelags (5; 103) aufweisen,
wobei mindestens ein Bremszylinder (4; 100, 100'; 200) nach einem der Ansprüche 1 bis 10 ausgebildet ist.

14. Hydraulische Felgenbremse für Fahrräder nach einem der Ansprüche 11 bis 13 mit zwei die Radfelge (6) zwischen sich einschließenden Bremszylindern (4; 100, 100'; 200),
wobei die Bremszylinder (4; 100, 100'; 200) jeweils um eine Achse schwenkbar angeordnet sind, die im wesentlichen parallel zu einem Rahmenteil (1) verläuft, an dem der jeweilige Bremszylinder (4; 100, 100'; 200) schwenkbar angeordnet ist.

15. Felgenbremse nach einem der Ansprüche 11 bis 14, **dadurch gekennzeichnet, daß** der oder die Bremszylinder (4; 100, 100'; 200) in Laufrichtung (8) der Felge (6) gesehen vor oder hinter dem Rahmenteil (1) angeordnet sind.

16. Felgenbremse nach einem der Ansprüche 11 bis 15, **dadurch gekennzeichnet, daß** beide Bremszylinder (4; 100, 100'; 200) schwenkbar angeordnet sind.

17. Felgenbremse nach einem der Ansprüche 11 bis 16, **dadurch gekennzeichnet, daß** die Schwenkachse in Laufrichtung (8) der Felge (6) gesehen zwischen derm Rahmenteil (1) und dem Bremszylinder (4; 100, 100'; 200) angeordnet ist.

18. Felgenbremse nach einem der Ansprüche 11 bis 17, **dadurch gekennzeichnet, daß** der oder die Bremszylinder (4; 100, 100'; 200) in einer Bremsstellung formschlüssig von dem zugehörigen Anordnungsglied (2, 2') aufgenommen sind (zur Kraftübertragung).

19. Felgenbremse insbesondere nach einem der Ansprüche 11 bis 18, **dadurch gekennzeichnet, daß** der oder die Bremszylinder (4; 100, 100'; 200) aus einer Montagestellung in eine definierte Bremsstellung schwenkbar sind.

## Claims

1. Brake cylinder (4; 100, 100'; 200) for a hydraulic rim brake, the brake cylinder having a receiving unit (10) for receiving a brake pad (5; 103) in the receiving unit,
wherein a direction of this receiving unit is equivalent to the running direction of the rim at the point where the brake pad to be inserted into the receiving unit makes contact with the rim, and a connecting member (41; 302) being arranged such that it defines an axis of rotation for a rotatable arrangement of the brake cylinder (4; 100, 100'; 200) on a frame part (1),
wherein the axis of rotation is essentially orthogonal to the main axis of the brake cylinder (4; 100, 100'; 200),
**characterised in that**
the axis of rotation is arranged essentially orthogonal to this direction of the receiving unit (10) for the brake pad (5; 103).

2. Brake cylinder (4; 100, 100'; 200) in accordance with claim 1, **characterised in that** the connecting member (41; 302) is in the form of an appendage of the brake cylinder (4; 100, 100'; 200).

3. Brake cylinder (4; 100, 100'; 200) in accordance with any of the preceding claims, **characterised in that** the connecting member (41; 302) has an orifice which can receive a bolt (3; 303) for the rotatable arrangement of the brake cylinder (4; 100, 100'; 200) on the frame part.

4. Brake cylinder (4; 100, 100'; 200) in accordance with any of the preceding claims, **characterised in that** the brake cylinder (4; 100, 100'; 200) can be actuated hydraulically.

5. Brake cylinder (4; 100, 100'; 200) in accordance with any of the preceding claims, **characterised in that** the brake cylinder (4; 100, 100'; 200) has a connecting member (41; 302) which holds a bolt (3; 303) which engages an arrangement member (2; 2'; 2") which is arranged on the frame part (1).

6. Brake cylinder (4; 100, 100'; 200) in accordance with any of the preceding claims, **characterised in that** the brake cylinder (4; 100, 100'; 200) has a means for releasably locking (300) the rotational movement.

7. Brake cylinder (4; 100, 100'; 200) in accordance with any of the preceding claims, **characterised in that** the brake cylinder (4; 100, 100'; 200) has a restoring spring which places the brake cylinder (4; 100, 100'; 200) under initial tension relative to the arrangement member (2; 2'; 2") in a braking position.

8. Brake cylinder (100; 200) in accordance with any of the preceding claims for a hydraulic brake comprising
a cylinder (101; 201) in which a piston (108; 208) is arranged so as to be displaceable in the axial direction of the cylinder (101; 201),
a pressure space (106; 206), the piston (108; 208) being displaceable in the cylinder (101; 201) by changing the volume of the pressure space (106; 206), and
an adjusting device (120; 220) by means of which the relative position of the free end of the piston (108; 208) is adjustable in the axial direction with respect to the cylinder (101; 201) in such a way that the volume of the pressure space (106; 206) remains essentially unchanged.

9. Brake cylinder (100) in accordance with claim 8, **characterised in that** the piston (108) together with the pressure space (106) can be displaced in the axial direction in the cylinder (101) by actuating the adjusting means (120).

10. Brake cylinder (200) in accordance with claim 8, **characterised in that** the piston (208) is adjustable in length.

11. Rim brake, in particular for bicycles, comprising one or two brake cylinders (4; 100, 100'; 200) in accordance with any of the preceding claims.

12. Rim brake, in particular for bicycles, in accordance with claim 11 comprising two brake cylinders (4; 100, 100'; 200) for fastening on frame parts (1) which enclose a wheel rim (6) between them,
wherein at least one brake cylinder (4; 100, 100'; 200) can be arranged on the frame part (1) so as to be rotatable about an axis which is essentially parallel to the frame part (1) at the fastening position.

13. Rim brake, in particular for bicycles, comprising two brake cylinders (4; 100, 100'; 200) for fastening on frame parts (1) which enclose a wheel rim (6) between them, and have each a receiving unit (10) for receiving a brake pad (5; 103),
wherein at least one brake cylinder (4; 100, 100'; 200) is arranged in accordance with any of claims 1 to 10.

14. Hydraulic rim brake for bicycles in accordance with any of claims 11 to 13, comprising two brake cylinders (4; 100, 100'; 200) enclosing the wheel rim (6) between them,
wherein the brake cylinders (4; 100, 100'; 200) are each arranged so as to be rotatable about an axis which is essentially parallel to a frame part (1) on which the respective brake cylinder (4; 100, 100'; 200) is rotatably arranged.

15. Rim brake in accordance with any of claims 11 to 14, **characterised in that** the brake cylinder or brake cylinders (4; 100, 100'; 200) are arranged in front of or behind the frame part (1), when viewed in the running direction (8) of the rim (6).

16. Rim brake in accordance with any of claims 11 to 15, **characterised in that** both brake cylinder (4; 100, 100'; 200) are rotatably arranged.

17. Rim brake in accordance with any of claims 11 to 16, **characterised in that** the axis of rotation, viewed in the running direction (8) of the rim (6), is arranged between the frame part (1) and the brake cylinder (4; 100, 100'; 200).

18. Rim brake in accordance with any of claims 11 to 17, **characterised in that**, in a braking position, the brake cylinder or brake cylinders (4; 100, 100'; 200) are held in an interlocking manner by the associated arrangement member (2, 2') (for force transmission).

19. Rim brake, in particular as claimed in any of claims 11 to 18, wherein the brake cylinder or brake cylinders (4; 100, 100', 200) can be rotated from a mounting position into a defined braking position.

## Revendications

1. Cylindre de frein (4 ; 100, 100'; 200) pour un frein hydraulique sur jante, ledit cylindre de frein comprenant des moyens de réception (10) pour la réception d'une garniture de frein (5 ; 103) dans les moyens de réception, dans lequel une direction de ce moyen de réception a la même signification que la direction de déplacement de la jante à l'emplacement auquel la garniture de frein qu'il s'agit de mettre en place dans le moyen de réception attaque la jante, et un organe de liaison (41 ; 302), réalisé de telle manière qu'il définit un axe de pivotement pour l'agencement pivotant du cylindre de frein (4 ; 100, 100' ; 200) sur une partie formant cadre (1),
dans lequel l'axe de pivotement est disposé sensiblement perpendiculairement à l'axe principal du cylindre de frein (4 ; 100, 100' ; 200),
**caractérisé en ce que** l'axe de pivotement est agencé sensiblement perpendiculairement à cette direction du moyen de réception (10) pour la garniture de frein (5 ; 103).

2. Cylindre de frein (4 ; 100, 100' ; 200) selon la revendication 1, **caractérisé en ce que** l'organe de liaison (41 ; 302) est réalisé sous forme d'attache pour le cylindre de frein (4 ; 100, 100' ; 200).

3. Cylindre de frein (4 ; 100, 100' ; 200) selon l'une des revendications précédentes, **caractérisé en ce que** l'organe de liaison (41 ; 302) comporte une ouverture dans laquelle peut être reçu un goujon (3 ; 303) pour l'agencement du cylindre de frein (4 ; 100, 100' ; 200) en pivotement sur la partie formant cadre.

4. Cylindre de frein (4 ; 100, 100' ; 200) selon l'une des revendications précédentes, **caractérisé en ce que** le cylindre de frein (4 ; 100, 100' ; 200) peut être actionné par voie hydraulique.

5. Cylindre de frein (4 ; 100, 100' ; 200) selon l'une des revendications précédentes, **caractérisé en ce que** le cylindre de frein (4 ; 100, 100' ; 200) comprend un organe de liaison (41 ; 302) dans lequel est reçu un goujon (3 ; 303) qui est en engagement avec un organe de localisation (2 ; 2' ; 2"), lequel est agencé sur la partie formant cadre (1).

6. Cylindre de frein (4 ; 100, 100' ; 200) selon l'une des revendications précédentes, **caractérisé en ce que** le cylindre de frein (4 ; 100, 100' ; 200) comprend un moyen d'arrêt libérable (300) du mouvement pivotant.

7. Cylindre de frein (4 ; 100, 100' ; 200) selon l'une des revendications précédentes, **caractérisé en ce que** le cylindre de frein (4 ; 100, 100' ; 200) comprend un ressort de rappel qui précontraint le cylindre de frein (4 ; 100, 100' ; 200) contre l'organe de localisation (2 ; 2' ; 2") dans une position de freinage.

8. Cylindre de frein (100 ; 200) selon l'une des revendications précédentes, pour un frein hydraulique, comprenant
un cylindre (101 ; 201) dans lequel est agencé un piston (108 ; 208) capable de translation en direction axiale du cylindre (101 ; 201),
une chambre à pression (106 ; 206), le piston (108 ; 208) étant déplaçable en translation dans le cylindre (101 ; 201) par variation du volume de la chambre à pression (106 ; 206), et
un dispositif de déplacement (120 ; 220) au moyen duquel la position relative de l'extrémité libre du piston (108 ; 208) est déplaçable en direction axiale par rapport au cylindre (101 ; 201) de telle manière que le volume de la chambre à pression (106 ; 206) reste sensiblement sans variation.

9. Cylindre de frein (100) selon la revendication 8, **caractérisé en ce que** par actionnement du dispositif de déplacement (120), le piston (108) est déplaçable en translation en direction axiale conjointement avec la chambre à pression (106) dans le cylindre (101).

10. Cylindre de frein (200) selon la revendication 8, **caractérisé en ce que** le piston (208) et réalisé réglable en longueur.

11. Frein de jante, en particulier pour cycle, comprenant un ou deux cylindres de frein (4 ; 100, 100' ; 200) selon l'une des revendications précédentes.

12. Frein de jante, en particulier pour cycle, selon la revendication 11,
comprenant deux cylindres de frein (4 ; 100, 100' ; 200) destinés à être fixés sur des parties du cadre (1) de telle manière que les cylindres de frein enferment entre eux une jante de roue (6),
dans lequel au moins un cylindre de frein (4 ; 100, 100' ; 200) est agencé sur la partie de cadre (1) en pivotement autour d'un axe qui s'étend sensiblement parallèlement au tracé de la partie de cadre (1) à l'emplacement de fixation.

13. Frein de jante, en particulier pour cycle,
comprenant deux cylindres de frein (4 ; 100, 100' ; 200) destinés à être fixés sur des parties du cadre (1) de telle manière que les cylindres de frein enferment entre eux une jante de roue (6), et comprennent chacun un moyen de réception (10) pour la réception d'une garniture de frein (5 ; 103),
dans lequel au moins un cylindre de frein (4 ; 100, 100' ; 200) est réalisé selon l'une des revendications 1 à 10.

14. Frein de jante hydraulique pour cycle selon l'une des revendications 11 à 13, comprenant deux cylindres de frein (4 ; 100, 100' ; 200) qui enferment entre eux la jante de roue (6),
dans lequel les cylindres de frein (4 ; 100, 100' ; 200) sont agencés respectivement en pivotement autour d'un axe qui s'étend sensiblement parallèlement à une partie de cadre (1) sur laquelle le cylindre de frein (4 ; 100, 100' ; 200) respectif est agencé en pivotement.

15. Frein de jante selon l'une des revendications 11 à 14, **caractérisé en ce que** le ou les cylindre(s) de frein (4 ; 100, 100' ; 200) est/sont agencé(s) devant ou derrière la partie de cadre (1), vu(s) en direction de déplacement (8) de la jante (6).

16. Frein de jante selon l'une des revendications 11 à 15, **caractérisé en ce que** les deux cylindres de frein (4 ; 100, 100' ; 200) sont agencés en pivotement.

17. Frein de jante selon l'une des revendications 11 à 16, **caractérisé en ce que** l'axe de pivotement est agencé entre la partie de cadre (1) et le cylindre de frein (4 ; 100, 100' ; 200), vu en direction de déplacement (8) de la jante (6).

18. Frein de jante selon l'une des revendications 11 à 17, **caractérisé en ce que** le ou les cylindre(s) de frein (4 ; 100, 100' ; 200) est/sont reçu(s) (pour la transmission de forces) à coopération de formes par l'organe de localisation associé (2 ; 2') dans une position de freinage.

19. Frein de jante selon l'une des revendications 11 à 18, **caractérisé en ce que** le ou les cylindre(s) de frein (4 ; 100, 100' ; 200) est/sont capable(s) de pivoter depuis une position de montage jusque dans une position de freinage définie.
